Europäisches Patentamt

European Patent Office

Office européen des brevets

(11) Publication number: **0 092 443**
**B1**

(12) **EUROPEAN PATENT SPECIFICATION**

(45) Date of publication of patent specification: **23.07.86**

(51) Int. Cl.⁴: **A 23 L 2/38**

(21) Application number: **83302257.7**

(22) Date of filing: **20.04.83**

(54) **Sunflower seed milk.**

(30) Priority: 20.04.82 JP 66490/82
25.10.82 JP 188005/82
01.11.82 JP 192905/82
02.11.82 JP 192840/82
02.11.82 JP 192845/82
29.11.82 JP 209888/82
01.12.82 JP 211816/82
01.12.82 JP 211817/82
24.01.83 JP 10183/83
26.01.83 JP 12005/83

(43) Date of publication of application:
26.10.83 Bulletin 83/43

(45) Publication of the grant of the patent:
23.07.86 Bulletin 86/30

(84) Designated Contracting States:
BE CH DE FR GB IT LI NL

(56) References cited:
DE-A-2 322 462
FR-A-2 417 263

CAN.INST.FOOD SCI. TECHNOL. J., vol. 10, no. 4, October 1977, pp. 229-232

The file contains technical information submitted after the application was filed and not included in this specification

(73) Proprietor: **SUMITOMO CHEMICAL COMPANY, LIMITED**
**15 Kitahama 5-chome Higashi-ku**
**Osaka-shi Osaka 541 (JP)**

(72) Inventor: **Fujisawa, Koichi**
**6-17 Honmachi 9-chome**
**Toyonaka Osaka-fu (JP)**
Inventor: **Kitajima, Akiko**
**5 Umezonocho**
**Moriguchi Osaka-fu (JP)**
Inventor: **Suzukamo, Gohfu**
**2-1-216 Kuwatacho**
**Ibraki Osaka-fu (JP)**

(74) Representative: **Geering, Keith Edwin et al**
**REDDIE & GROSE 16 Theobalds Road**
**London WC1X 8PL (GB)**

Courier Press, Leamington Spa, England.

## Description

The present invention relates to drinking compositions and their production, and provides a sunflower seed milk composition which comprises (1) seed milk obtained by the pulverisation of dehulled sunflower seed in the presence of water without insolubilization or separation of the seed protein and (2) alkaline compound, the pH of the composition being 6.5—8.0.

The constituents of the composition are present in the aqueous medium principally in any of the conditions of emulsion, suspension and dissolution, in the state generally called vegetable seed milk.

Sunflower seed is an oil seed with the second largest output in the world; its output in the 1978/79 agricultural year is said to be about 13,000,000 tonnes (Yushi (Oil and Fat), Vol. 33, 54). Heretofore, of the constituents of sunflower seed, the oil alone has been used for human consumption; other constituents, proteins and glucosides, have been used only in animal feedstuff. Also, the use of processed sunflower seed for human food is said to be unsatisfactory, although it is seen in part in snack foods.

Generally, sunflower seed contains 40 to 60% of oil, which has high contents not only of linoleic acid, an unsaturated fatty acid, but also of $\alpha$-tocopherol which is vitamin E of strong physiological activity. Further, sunflower seed is rich in vitamin B complex, and proteins from the seed contain sulfur-containing amino acids in relatively large amounts. Sunflower seed is thus an important food resource in terms of health, and in the present situation of worldwide food shortage development of novel foods from sunflower seed and its constituents is an important contribution to the effective use of underexploited food resources.

A case in which sunflower seed proteins have been proposed for use in a drink is disclosed in Can. Inst. Food Sci. Technol. J., Vol, 10, 229 (1977), according to which cow's milk is enriched by defatting sunflower seeds with petroleum ether, further treating the defatted powder to remove chlorogenic acid, (which causes coloration) and then blending the product with cow's milk. This protein-enriched milk contains substantially no lipids and is fundamentally different from the composition according to the present invention.

In Nutritional Reports International, March 1982, Vol. 25 No. 3 there is an article starting at page 519 which describes the production of sunflower seed milk for use with soy milk in making tofu (Japanese bean curd). In the described production of the sunflower seed milk, 1 kg of dehulled sunflower seed kernels were ground with five times the weight of water and the blended slurry was filtered through a muslin cloth, and the milk obtained was 5.1 kg. However, sunflower seed milk made in this way would have a pH below 6.5 and would be unstable, and the article does state that "the sunflower seed milk gets coagulated even at temperature below 100°C".

DE—A—2322462 discloses a method in which sunflower seed is pulverized in the presence of 10% aqueous NaCl, protein is extracted, and then the pH is adjusted to 3.0 to recover globulin before the material is heat-treated to recover albumin. FR—A—2417263 discloses a method in which ground oil seed (e.g. sunflower seed) is maintained in boiling water for sufficient time to insolubilize the protein, the pH then being adjusted to 3.7 to 8.5 for separation and recovery of the protein. These prior methods are in contrast to the present invention wherein stable sunflower seed milk is obtained by pulverizing dehulled sunflower seed in water without insolubilization or separation of protein, with pH adjustment to 6.5 to 8.0 by addition of alkaline compound.

Although sunflower seed has characteristics as described above, vegetable seed milk obtained from it, because of chlorogenic acid and polyphenols contained in the seed, is colored green and has an astringent taste, and was therefore considered unsuitable for drinking. In addition, since proteins in sunflower seed are globulins sparingly soluble in water, the vegetable seed milk is low in protein content and watery, and was considered to be inferior in tastiness for drinking purpose.

The present invention provides a sunflower seed milk which can be superior in smell, taste and color to prior seed milks.

Conventional vegetable seed milk includes soy milk made from soyabean which is produced in large amounts by the modern process. Soy milk has an unfavourable grassy smell, heavy flavour and bitterness and in spite of the recent considerable progress of deodorizing techniques, it does not yet find general acceptance. The composition according to the invention has no such unfavourable flavour and bitterness.

The solid content of the composition according to the present invention is not critical, but it is preferably 3 to 20%, more preferably 5 to 15%.

In the composition of the present invention, lipids and proteins from sunflower seed are essential components, but constituents of other oil seeds and/or animal proteins may also be present.

As the oil seeds other than sunflower seed, soyabean, peanut, pine nut, sesame, cacao bean, safflower and the like may be used according to taste.

It is desirable that the constituents of sunflower seed constitute no less than 20% of the total non-aqueous content of the composition of the present invention.

The composition according to the present invention contains substantially no solid matter from the sunflower seed hull; since the hull is made up of insoluble polysaccharides (e.g. cellulose), lignins, etc., it would give a blackish color to the composition even if finely pulverized, and would make the composition undesirably rough to the tongue. It is therefore desirable to remove the hull from sunflower seeds in advance or by centrifugation in the course of production to make the composition substantially free from the hull.

The pH of the composition of the present invention is 6.5 to 8.0. When the pH is more than 8.0 the composition has undesirable color and smell—in extreme cases, the composition may be green and/or have a mouldy odor suggestive of wet soil.

As to the physiochemical state of the composition according to the present invention, it is essential that the constituents of sunflower seed or other components are not in simple admixture, but in emulsion, suspension or dissolution, in the aqueous medium, i.e. in the state of the so-called vegetable seed milk. Thus, said composition is a novel one suitable for drinking having a milky white to slightly yellowish cream appearance as well as fluidity to semi-fluidity.

The composition according to the present invention may be used for drinking with or without flavoring or perfuming according to taste or need, and it may be eaten in semi-solid gelled condition. The composition is fundamentally a simulated dairy product, and may be used as such where milk, for example cow's milk, is used.

The composition of the present invention may contain other components such as milk proteins, polysaccharides, edible reducing agents, metallic ion chelating agents, surfactants, pH-regulators, and the like.

The sunflower seed milk alone is not always storage stable and on long storage may gel and coagulate to become unsuitable for drinking. To improve storage stability it is desirable to add milk proteins and/or polysaccharides.

The "milk protein" may be used in the form of milk, dairy products and substances or compositions containing proteins extracted therefrom. As milk, cow's milk, goat's milk and the like are available according to taste, but cow's milk is preferred because of its abundance and stability. As dairy products, skim milk, concentrated milk, whole milk powder, skim milk powder, whey and the like may be used. Further, substances or compositions containing proteins extracted from milk or dairy products include for example casein and its potassium, sodium or calcium salt and compositions containing them, lactalbumin and the like.

The protein content of sunflower seed milk is low compared with its lipid content and it is sometimes preferred to enrich the proteins. Milk proteins may thus not only improve storage stability but also usefully enrich the protein content; mil proteins also improve the amino acid pattern and the tastiness of the product.

The amount of these milk proteins added is not critical, but a suitable amount thereof is 1 to 200%, as milk proteins, based on the vegetable seed proteins; preferably, the amount is up to 50%.

Of the foregoing milk proteins, cow's milk, skim milk obtained from cow's milk, skim milk powder, whey, casein, the potassium, sodium or calcium salt of casein, and lactalbumin are preferably used.

Polysaccharides may be used alone or together with milk proteins. As polysaccharides, for example pectin, alginic acid, sodium alginate, carrageenan, gum arabic, gum tragacanth, cellulose, carboxymethyl cellulose and the like may be used. A sufficient amount of polysaccharides is 0.01 to 5% based on the vegetable seed milk composition; more preferably, the amount is 0.05 to 1.0%.

Further, metallic ion chelating agents may be used, if necessary, to inhibit the function of metallic ions which are contained in vegetable seed milk and considered to promote the geletion and coloration of the vegetable seed milk.

As metallic ion chelating agents polyphosphoric, citric and phytic acids and potassium or sodium salts thereof may be used. By using metallic ion chelating agent, gelation of vegetable seed milk (particularly gelation on heating) can be prevented to some degree; the effect on prolonged storage stability is not always satisfactory, however, and it may therefore be preferred to use milk proteins together with metallic ion chelating agents. A sufficient amount of metallic ion chelating agent used is 0.001 to 2%, preferably 0.01 to 1%.

More preferably, edible reducing agents such as ascorbic acid, erisorbic acid, sulfurous acid and the sodium and potassium salts thereof and the like may be used for preventing vegetable seed milk from coloration during storage. The amount of reducing agent is not critical, but may be 0.001 to 5% based on the vegetable seed milk. For example, with vegetable seed milk having a solid content of about 10%, the object of the present invention can sufficiently be achieved by the addition of 0.1 to 1.0% of the agent.

In producing the composition of the present invention, a thin skin, called a skin layer, is preferably removed from the sunflower seeds in order to obtain a smoother taste. The kind of sunflower seed ranges from those having an oil content of about 50% (called oil seeds) to those having a relatively low oil content (called confectionary seeds).

In producing the composition of the present invention, these kinds may be appropriately selected according to taste, or used in mixtures without particular distinction.

Production of the composition of the present invention with a mixture of sunflower seed and other oily seed is included in the scope of the present invention; production of the composition by separately producing vegetable seed milks from sunflower seed and the other oily seed and mixing the milks is also included. As described above, there are various kinds of oily seed other than sunflower seed, but soyabean is preferred.

Unlike sunflower seed, soyabean contains more proteins than lipids, and for example, when a sunflower seed/soyabean (1:1 by weight) mixture is used as a raw material, compositions containing lipids and proteins in a ratio of about 1:1 can be obtained, and the grassy smell peculiar to soy milk can be decreased substantially. Sunflower seed contains little lysine, while soyabean lacks sulfur-containing amino acid such as methionine and cystine. Consequently, by using sunflower seed and soyabean together as raw material, emulsified drinks improved in amino acid composition and richer in nutriment are obtained.

In the present invention, in order to regulate the lipid: protein ratio of vegetable seed milk according to taste and to achieve a further improvement in nutriment and tastiness, it is possible to use partially defatted sunflower seed and/or to include fully defatted sunflower seed. In addition to or instead of this, any of oily seed other than sunflower seed and defatted products and lipids obtained therefrom can be included. By choice of raw material the lipid content is reduced or the protein content increased according to taste, thereby regulating the lipid: protein ratio to, for example, about 1:1 which is similar to that of cow's milk.

The defatting method is not critical, and defatting may be carried out, for example, by pressing and/or extraction with n-hexane solvent. As the defatted product of sunflower seed, either of more than 80% defatted products substantially free from lipids or partially defatted products obtained by 20 to 80% defatting, will do.

Preferably, the defatting is carried out so as to minimize the denaturation of proteins by heat and solvent.

When partially defatted products of the sunflower seed are used, it is sufficient to previously defat a required amount so as to obtain vegetable seed milk having a desired protein: lipid ratio. By this means, desired vegetable seed milk can be obtained using the defatted product alone of sunflower seed. In this case, addition of lipids is not always necessary, but lipids may be added for further regulation of the protein: lipid ratio.

As defatted product substantially free from lipids, oil cake, which is a by-product from commercial production of sunflower oil, may be used.

Generally, lipids are substantially absent from oil cake after separation of sunflower oil (generally called "meal" or "flour"), concentrates and isolates having an increased content of proteins. For producing vegetable seed milk having a desired protein: lipid ratio, these defatted products of sunflower seed substantially free from lipids are used with non-defatted sunflower seed. Sunflower oil and/or defatted product or lipids of oil seeds other than sunflower seed may also be added.

As the vegetable oil other than sunflower, the oil of various oil seeds, for example, safflower oil, corn oil, soyabean oil, cotton seed oil, palm oil, etc. may be used.

The method of adding these oils is not critical—for example, in the step of pulverizing defatted sunflower seeds, these oils are added simultaneously or the defatted sunflower seeds are pulverized in the presence of water having these oils previously emulsified therein.

In this case, lipids other than those of sunflower seed enter the vegetable seed milk, but the flavour of sunflower seed is sufficiently made use of, unlike the case wherein a simple mixture of sunflower seed and soyabean is used as raw material.

When vegetable seed milk is produced using sunflower seeds not partially defatted to a desired degree, vegetable seed milk having a desired protein: lipid ratio can be produced by the addition of proteins or lipids.

It is undesirable to store defatted sunflower seed for long periods, so that after the defatting immediate production of the vegetable seed milk is preferred.

By using the defatted material as described above, compositions of the present invention having, for example, a protein content of 0.1 to 10% and a lipid content of 0.1 to 20% can be produced. When the composition is however used for drinking as vegetable seed milk, both its protein content and lipid content are preferably about 1 to about 5%. Further, when it is used, for example, as coffee whitener or whipped topping, it is preferred that the protein content is about 1 to about 5% and the lipid content is about 10 to about 20%. Vegetable seed milk can be produced, for example, by pulverizing sunflower seeds in the presence of water to extract the constituents of the seeds into the aqueous phase, and separating solid matters from the aqueous extract.

Sunflower seed or a mixture of sunflower seed and other oily seed may be roughly crushed prior to the steps described below.

In the present invention, sunflower seed, and any other oily seeds used together therewith, may separately be soaked in water prior to pulverization. The soaking time and temperature required are not critical, but such a high temperature and prolonged soaking as to cause thermal coagulation of proteins should be avoided. One object of soaking is to remove as much chlorogenic acid as possible (and it is therefore best to remove the soaking water by draining). This object can be attained by prolonged soaking at less than 40°C, for example, about room temperature, or by shorter soaking at more than 40°C. A temperature more than 40°C is preferred also for obtaining more stable vegetable seed milk, and more preferably the temperature is 70° to 140°C. High temperature and prolonged soaking is not preferred because of the percent recovery of proteins being lowered. Consequently, such soaking conditions as 70°C×within 2 hours, 100°C (in boiling water)×within 30 minutes, 120°C×within 20 minutes, etc. can be given as example.

For carrying out soaking either boiling or steaming may be employed in addition to soaking in aqueous media, provided that substantial thermal coagulation of proteins is avoided.

When sunflower seed and other oil seeds are to be used together, it is preferred that they are separately soaked, to avoid migration to the other seeds (and hence presence in the milk product) of chlorogenic acid soaked from the sunflower seed. For the same reason, the seed after soaking is preferably drained before the subsequent steps.

However, a liquor obtained by soaking of seeds other than sunflower seed and then draining, may be used for soaking sunflower seeds. This is preferred not only for reducing the amount of waste water to be treated, but also because chlorogenic acid from sunflower seed is reduced by its reaction with proteins present in the liquor, so that loss of sunflower seed protein owing to reaction with chlorogenic acid is decreased.

The seed after soaking and draining may be roughly crushed prior to pulverization. When sunflower seed is used together with other oily seeds, the rough crushing may be carried out either before or after mixing the seeds. The roughly crushed seed may be soaked, but such a degree of rough crushing should be avoided so as to increase the effusion of the constituents of the seed.

The seed, optionally after soaking and draining as above, is then pulverized in the presence of water.

The object of pulverization (first step) is pulverization and dispersion for carrying out an efficient extraction of the seed constituents. Pulverization can be carried out with conventional equipment e.g. cutter-type mixers, colloid mills, grinder-type mills, hammer mills, etc. Two or more machines, which may be same or different, may be used connected in series. This operation may be carried out batchwise or continuously.

The amount of water used is not critical but from the standpoint of protein concentration and taste, it is preferably not more than 30 times by weight, preferably about 5 times by weight based on the seed.

The water used is not critical, and it may be any of city water, ion-exchange water, distilled water, alkaline water, heated water, deaerated water and the like.

Further, milk protein, edible reducing agent and the like may be added at this first step, and in this case, they may be previously pulverized in the presence of added water.

After pulverization solid matter is removed from the extract by usual means such as filtration or centrifugation.

It is preferred that the pulverized product has an adjusted pH of 6.5 to 7.5.

After completion of the first step, the pulverized product is preferably heat-treated with stirring (second step). In the second step, it is more preferred for the vegetable seed milk to have an adjusted pH of 6.5 to 7.5.

After completion of the second step, it is further preferred to re-pulverize the vegetable seed milk (third step).

As described hereinbefore, the first step is one to pulverize sunflower seed in the presence of water. When a mixture of sunflower seed and other different oil seeds is used in place of sunflower seed, both the seeds are mixed prior to this step. Consequently, in explanation on this step and steps following it, unless otherwise stated, the term "sunflower seed" shall also mean "a mixture of sunflower seed and oily seeds other than sunflower seed".

The pH adjustment of vegetable seed milk obtained at the first step is carried out by adding an alkaline substance. The addition of alkaline substance is carried out on or after pulverization, but the pH may be adjusted in steps on and after pulverization.

When insoluble solid matter is removed after completion of pulverization, the pH needs to be adjusted before the removal of said solid matter.

The pH-regulating agent is not critical, but alkaline substances such as sodium hydroxide, sodium carbonate, sodium hydrogencarbonate, sodium phosphate, sodium monohydrogenphosphate, sodium citrate, etc. and aqueous solutions thereof may be used.

When the pH is less than 6.5, the protein content and solid content of vegetable seed milk obtained by the removal of said insoluble solid matters are lowered, thereby giving a watery taste.

While pH values more than 7.5 give increased protein content and solid content, but are not preferred in terms of the color and smell of the vegetable seed milk obtained. That is, when the pH is made 7.5 or more, the coloration of vegetable seed milk increases, and in extreme cases, the vegetable seed milk is colored green. Also, the vegetable seed milk may have a mouldy odor suggestive of wet soil.

In the second step, the vegetable seed milk or slurry obtained by pulverization may be maintained with stirring at a temperature of from 65°C to the boiling point. This step may be carried out by stirring the vegetable seed milk or slurry by means of a temperature-controllable line mixer during transportation between the first step and the third step, or by maintaining it at such temperature in a stirring vessel.

The elevated temperature is preferably maintained for not less than 5 minutes, e.g. for 180 minutes.

For stirring, usual stirring is satisfactory, and high-speed and high-shear stirring machines as used in pulverization and emulsification are not always necessary.

The present inventors examined the influence on protein recovery of the temperature and time of the soaking of sunflower seed. As a result, it was found that the percent recovery of proteins was lowered with increase in the soaking time and soaking temperature. On 10 minutes' and 30 minutes' soaking at varying temperatures of 60°C, 80°C and 100°C, reduction in the percent recovery of proteins became larger at higher temperatures and, for the same temperature, at longer periods of soaking time. The present inventors assumed that this phenomenon was due to the thermal coagulation of proteins.

For the heat-treatment step (second step), however, the present inventors surprisingly found that the percent recovery of proteins after the removal of insoluble solid matter increased at higher temperatures and at longer periods of retention time. That is, when 10 minutes' and 30 minutes' heat-treatment carried out with stirring at varying temperatures of 50°C, 65°C and 80°C, the percent recovery of proteins after the removal of insoluble solid matters increased at higher temperatures and, for the same temperature, at longer periods of retention time.

The effect of the temperature of this heating step on the percent recovery of proteins is not related to whether or not soaking has been carried out; and when soaking has been carried out, the effect is not related to the soaking conditions, giving a larger percent recovery of proteins as an increase in the temperature and retention time of this step. When the temperature and retention time of this step are definite, however, the percent recovery of proteins depends upon whether or not soaking has been carried out or the soaking condition, and it is largest when soaking has not been carried out.

In this second step, it is more preferred for the vegetable seed milk to have an adjusted pH of 6.5 to 7.5. The pH adjustment is carried out by the addition of the foregoing pH-regulating agents. The addition of the agent may be at the first and/or second step. When the pH is adjusted at the first step, it is preferred to use alkaline water as the water for pulverization. As the alkaline water, aqueous solutions of the foregiong pH-regulating agents may be used.

By regulating both the temperature and the pH, the percent recovery of proteins and that of solid matters are further improved, and vegetable seed milk having an improved taste is obtained.

The third step is one to re-pulverize vegetable seed milk after the second step. Re-pulverization can be carried out in the same manner as in the first step, and the equipment used may be the same as used in the first step, but in this case, high-pressure homogenizers can effectively be used.

The third step makes the recovery of proteins and solid matters more efficient and improves emulsion stability.

From the sunflower seed milk obtained through the third step, are removed insoluble solid matters as need arises. For the removal of said matters, centrifuges, sieves, etc. may be used.

The vegetable seed milk after removal of the insoluble solid matters may be pasteurized or sterilized, homogenized, cooled, filled or the like if necessary. These steps may be carried out satisfactorily by the usual methods. For the homogenization, for example, high-pressure homogenizers can effectively be used.

A method having a combination of the first, second and third steps is very desirable.

Vegetable seed milk can be produced by the method as described above, but, as mentioned above, it is preferred to add milk proteins in order to prevent the seed milk from gelation.

Milk proteins may be added at the first, second or third step. The addition may be carried out even after the third step, and when pasteurization or sterilization is to be applied, it is preferably carried out before pasteurization or sterilization. When milk proteins are powdery, they may be added as aqueous solution.

Similarly, polysaccharides, metallic ion chelating agents and edible reducing agents may be added at any of the foregoing steps.

Suitable sweetening agents, perfuming agents, coloring agents, flavoring agents and the like may be added to the vegetable seed milk thus obtained. according to taste.

As described above, sunflower seed and proteins obtained therefrom are very important resources, but at present, it is a fact that use of sunflower seed as foods and that of proteins extracted therefrom is limited. One of the reasons for this is that, since sunflower seed contains polyphenols, particularly chlorogenic acid and caffeic acid, green and brown colorations occur under heating and alkaline conditions. Such coloration not only lowers the value of sunflower seed as foods, but also restricts the utility of proteins because of the proteins turning insoluble owing to their reaction with the polyphenols.

The conventionally employed method to remove polyphenols, particularly chlorogenic acid, having undesirable properties like this is extraction with organic solvents, as disclosed, for example, in Japanese Patent Application (Laid-open) No. 108100/1976.

In the method disclosed in said application Sunflower seed is powdered, defatted with n-hexane and dried to obtain a powder, and this powder is extracted eight times with an extracting solvent comprising a dilute hydrochloric acid having a pH of 2.30 and 92 parts of n-butyl alcohol, of which the pH is kept, for example, at the isoelectric point of protein.

This method is good in chlorogenic acid-extracting effect, but not always satisfactory in that, since an organic solvent is used as extracting solvent, problems such as residual toxicity and denaturation of protein are caused. In addition, since the extraction should be repeated eight to ten times in order to carry it out effectively, eight to ten extracting vessels should be installed to apply this method in industry. Consequently, this method is not a satisfactory one. Also, this method is quite useless as a means to remove polyphenols from the vegetable seed milk according to the present invention.

The present invention allows one to remove polyphenols from vegetable seed milk obtained by pulverization of sunflower seed in the presence of water, and by this method, polyphenols can be removed easily and effectively from the vegetable seed milk. Consequently, the vegetable seed milk obtained by this method of the present invention shows little or no coloration under heating or alkali conditions.

The characteristic of this method of the present invention is that an object to be treated for the removal of polyphenols is vegetable seed milk obtained by pulverizing sunflower seed in the presence of alkali by means such as grinding.

The vegetable seed milk is produced, for example, by the foregoing methods. In removing polyphenols, the removal of insoluble solid matters present in the vegetable seed milk is not always necessary, but for a prolonged continuous run, to remove the insoluble solid matters at either one of the steps in the course of vegetable seed milk production is desirable.

As means to remove polyphenols, molecular sieve membranes may be used. The material and form of molecular sieve membranes are not particularly limited, and cellulose membranes, ultrafiltration membranes having an anisotropic structure, disk-form flat membranes, hollow fibers and the like may optionally be used according to the method of use. Also, molecular sieve membranes may optionally be used for dialysis, concentration, diafiltration, etc.

Further, as means to remove polyphenols, various types of adsorbing resin may also be used. As such resin, adsorbing resins of polystyrene type, particularly various types of non-functional type resin, for example, commercially available products such as Duolite® S-861, Duolite® S-862, Duolite® S-863 (styrene type adsorbing resins, Sumitomo Chemical Co. Ltd.) and the like, may be used effectively.

The method of using adsorbing resins is not critical, and for example, it may be either of a batch-form or continuous form wherein vegetable seed milk is passed through a column packed with the resins.

The vegetable seed milk obtained as above may also be used as coffee whitener and whipped topping with addition of vegetable oils.

Recently, various simulated dairy products making use of soyabean protein and/or vegetable fat have been developed, and used as coffee whitener and whipped topping. But soyabean protein used for the production of various simulated dairy products, as disclosed in Japanese Patent Application (Laid-open) No. 144764/1976, is soyabean protein isolates. Fundamentally, coffee whitener and whipped topping ought to be produced by adding a vegetable oil and fat to soyabean milk having appropriate solid content, followed by emulsification, but expensive soyabean protein isolates is used because the grassy smell peculiar to soyabean does not suit the flavor of coffee whitener and whipped topping.

Contrary to this vegetable seed milk compositions containing an increased oil content as compared with protein content obtained by adding a vegetable oil and fat to the vegetable seed milk of the present invention, are suitable as coffee whitener and whipped topping. As vegetable seed milk used as material for this purpose, vegetable seed milk comprising sunflower seed or sunflower seed and a seed other than sunflower seed may be used. As the seed other than sunflower seed, soyabean peanut, pine nut and the like may be used according to taste.

The amount of vegetable oil and fat used in preferably 2 to 30 times by weight based on the protein content of the vegetable seed milk. The proportion of vegetable fat in the total composition including fat resulting from vegetable seed milk is, for example, preferably about 3 to about 20% for use a coffee whitener, and about 20 to about 35% for use as whipped topping.

As the vegetable oil and fat, cocoa-nut oil, palm oil, cacao oil, sunflower oil, soyabean oil, cotton seed oil and the like may be used.

Preferably, for the purpose of improving the stability of emulsions comprising sunflower seed milk and vegetable oil and fat, surface active agents are added. By adding surface active agents, an emulsion condition useful as coffee whitener and whipped topping can be maintained. As the surface active agents, glycerin fatty acid esters, sorbitan fatty acid esters and sucrose fatty acid esters are preferably used. A suitable amount of surface active agent to use is 0.05 to 5% based on the vegetable seed milk; more preferably, the amount is 0.1 to 2%.

A pH-regulating agent may be added if necessary particularly when the vegetable seed milk composition of the present invention is used as coffee whitener.

The term "pH-regulating agent" referred to herein means an inorganic salt acting as a buffer to prevent proteins from coagulation and precipitation due to the acidity of coffee, even when the vegetable seed milk composition of the present invention is used as coffee whitener. As such a pH-regulating agent, there may be used phosphates, citrates, borates and the like, e.g. disodium hydrogen phosphate, dipotassium hydrogen phosphate, sodium citrate and the like. A suitable amount of pH-regulating agent is 0.05 to 5% based on the vegetable seed milk; more preferably, the amount is 0.1 to 2%.

More preferably, in these cases, milk proteins and polysaccharides are also added to prevent the gelation and coagulation of the vegetable seed milk composition. It is also preferred to use edible reducing agents in order to prevent coloration.

The content of water from skim milk and concentrated milk among milk and dairy products, together with that of water from vegetable seed milk, is important because the water content of the foregiong composition is mainly determined by said content. The water content of the foregoing composition is not critical, but is limited to some degree depending upon the form and method of use of the composition. For example, when the composition is used as coffee whitener, its water content is preferably about 60% to about 90% in general, and when used as whipped topping, its water content is preferably about 50% to about 70% in general. Consequently, the solid content of vegetable seed milk, amount of vegetable fat added, and solid content of milk and/or dairy products should be regulated so as to obtain a water content suitable for the form and method of use.

The foregoing vegetable seed milk composition can be regulated by blending with vegetable seed milk, vegetable oil and fat, surface active agents and if necessary, pH-regulating agents, and preferably, additional milk proteins, polysaccharides, edible reducing agents and metallic ion chelating agents. For example, the regulation of the composition can be carried out as follows: To sunflower seed milk, or vegetable seed milk obtained from sunflower seed and oily seeds other than sunflower seed, are added surface active agents and if necessary, pH-regulating agents and preferably, milk proteins, polysaccharides, edible reducing agents and metallic ion chelating agents with stirring to obtain a vegetable seed milk composition; the vegetable seed milk composition thus obtained is pre-emulsified after or while adding vegetable oil and fat, to which surface active agent has been added if necessary, so that the amount of the vegetable oil and fat is 2 to 30 times by weight based on proteins contained in the vegetable seed milk; and after pasteurization or sterilization, the pre-emulsified composition is further homogenized by means of a high-pressure homogenizer.

For the pre-emulsification, the commonly employed equipment having a mechanical stirrer may be used satisfactorily. Such equipment includes for example cutter-type homogenizers. The stirring time is not critical, but preferably is about 5 to about 30 minutes. Further, for minimizing coloration, stirring under non-oxygen atmosphere or under reduced pressure is preferred.

Homogenization by high-pressure homogenizers may be carried out by either a one-step or a two-step one. In the one-step method, the pressure is preferably regulated to 9.81—29.43 mPa (100 to 300 kg/cm$^2$), and in the two-step method, the pressure is preferably regulated to 9.81—19.62 mPa (100 to 200 kg/cm$^2$) for the first step, and 4.91—14.72 mPa (50 to 150 kg/cm$^2$) for the second step.

In practicing the present invention, in addition to the foregoing components, other components, as usually added to this type of simulated dairy product, such as perfuming agents, coloring agents, flavoring agents, etc. may be added if necessary.

The present invention is illustrated in more detail with reference to the following Examples.

Example 1

Five hundred grams of a hull-free (dehulled) sunflower seed was soaked for 5 minutes in 2,000 g of boiling water, followed by draining. The soaked seed was twice treated on a wet-type pulverizer while adding 4,500 g of water containing 0.2% of sodium citrate, 0.2% of glycerin fatty acid ester, 0.2% of sodium ascorbate and 0.4% of casein sodium. The pH of the resulting slurry was adjusted to 6.8 with 1N Na$_2$CO$_3$, while maintaining the slurry at 80°C for 10 minutes with stirring. Thereafter, the slurry was further pulverized on a wet-type pulverizer and a high-pressure homogenizer, centrifuged to remove insoluble solid matters, and after pasteurizing by heating, homogenized to obtain a sunflower seed milk. The vegetable seed milk obtained had a solid content of 8.6%, a protein content of 2.1%, as calculated with a conversion coefficient as 5.7, and superior color and smell. Said vegetable seed milk was stored for 60 days in a refrigerator at 5°C, but remained a stable emulsion without gelation and coloration.

Example 2

Sixty grams of a hull-free sunflower seed was soaked for 5 minutes in 300 g of boiling water, followed by draining. The soaked seed was twiced treated on a wet-type pulverizer while adding 540 g of water containing 0.2% of sodium ascorbate and 0.4% of casein sodium. The pH of the resulting slurry was adjusted to 7.0 with 1N NaHCO$_3$ while maintaining the slurry at 80°C for 10 minutes with stirring. Thereafter, the slurry was further pulverized on a wet type pulverizer and a high-pressure homogenizer, centrifuged to remove insoluble solid matters, and after pasteurizing by heating, homogenized to obtain a sunflower seed milk. The vegetable seed milk obtained had a solid content of 8.5%, a protein content of 2.0%, as calculated with a conversion coefficient as 5.7, a lipid content of 5.4% and superior color and smell. Said vegetable seed milk was stored for 60 days in a refrigerator of 5°C, but remained a stable emulsion without gelation and coloration.

Example 3

A sunflower/soyabean mixed vegetable seed milk was obtained in the same manner as in Example 1 except that the material used was 30 g of sunflower seed and 30 g of soyabean, both of which were separately soaked. The vegetable seed milk obtained had a solid content of 8.5%, a protein content of 3.1%, as calculated with a conversion coefficient as 5.7, a lipid content of 3.4% and superior color and smell. Said mixed milk was stored for 90 days in a refrigerator of 5°C, but it remained a stable emulsion without gelation and coloration.

Example 4

To 500 g of the sunflower seed milk produced by the method of Example 1 was added 50 g of skim milk powder dissolved in 450 g of distilled water, and the mixture was kept at 70°C for 10 minutes with stirring. The resulting mixed solution was treated on a wet-type pulverizer and then homogenized on a high-pressure homogenizer. The sunflower seed/skim milk powder mixture had a solid content of 9.0%, a protein content of 2.5%, as calculated with a conversion coefficient as 5.7, a lipid content of 2.6% and superior color and smell. Said mixed milk was stored for 90 days in a refrigerator of 5°C, but remained a stable emulsion without gelation and coloration.

Example 5

120 Grams of a hull-free sunflower seed was soaked for 5 minutes in boiling water, ground on a cutter-type homogenizer in the presence of 300 g of water and then on a wet-type pulverizer in the presence of a mixture comprising 10 g of 1N $Na_2CO_3$ and 600 ml of water containing 4.8 g of a casein/sodium salt mixture (Sunlact® M-1 produced by Taiyō Kagaku Co.) and 2.4 g of sodium ascorbate, and then heat-treated at 80°C for 10 minutes. The slurry obtained was treated on a wet-type pulverizer and then on a high-pressure homogenizer, freed from solid matters and heat-pasteurized to obtain a vegetable seed milk composition. When the composition was stored in a refrigerator of 5°C, it remained a stable emulsion without gelation even 70 days after production, and also retained its original color.

Test Example 1

Sixty grams each of a hull-free sunflower seed, as treated by the following three methods:
(i) no soaking,

(ii) soaking in a 100°C alkali liquor (pH, 10.0) for 5 minutes, followed by draining, and
(iii) steeping in a 100°C distilled water for 10 minutes, followed by draining,

was pulverized on a wet-type pulverizer in the presence of 840 g of water. The pH of the slurries obtained was adjusted to 7.0 with 1N sodium carbonate while maintaining each of them at the varying conditions (a), (b), (c) and (d) with stirring:
(a) 80°C×30 minutes,
(b) 80°C×10 minutes,
(c) 60°C×30 minutes,
(d) 60°C×10 minutes.

The slurries were again pulverized on a wet-type pulverizer and then on a high-pressure homogenizer, centrifuged to remove insoluble solid matters, heat-pasteurized and then homogenized to obtain a sunflower seed milk. The protein content of the vegetable seed milk obtained was measured on a total organic carbon/total nitrogen analyzer, GCT-12N type, (produced by Sumitomo Chemical Co.) to obtain the percent recovery of proteins. The results are collected in Table 1. It was found from the results that the percent recovery of proteins is generally larger at 80°C than at 60°C, and when the temperature is the same, at 30 minutes rather than at 10, independently of whether or not soaking was applied and of the soaking conditions.

TABLE 1

| Soaking | Heat-treatment | | Percent recovery of protein (%) |
|---|---|---|---|
| | Temperature (°C) | Time (min) | |
| No soaking | 80 | 30 | 80 |
| | 80 | 10 | 69 |
| | 60 | 30 | 58 |
| | 60 | 10 | 53 |
| 100°C Alkali water (pH, 10.0)×5 min. | 80 | 30 | 60 |
| | 80 | 10 | 53 |
| | 60 | 30 | 43 |
| | 60 | 10 | 41 |
| 100°C Distilled water ×10 min. | 80 | 30 | 37 |
| | 80 | 10 | 35 |
| | 60 | 30 | 30 |
| | 60 | 10 | 32 |

Example 6

Two hundred grams of a hull-free sunflower seed was soaked for 5 minutes in 1,000 g of boiling water, followed by draining. The soaked sunflower seed was treated on a wet-type pulverizer while adding 15 ml of 1N sodium carbonate and 1,800 g of water containing 0.2% of sodium ascorbate and 0.4% of casein sodium. The resulting slurry was further treated on a high-speed cutter-type emulsifying machine and then on a high-pressure homogenizer. Thereafter, the slurry was centrifuged to remove insoluble solid matters, homogenized again on a high-pressure homogenizer, and then heat-pasteurized to obtain a sunflower seed milk. The vegetable seed milk obtained had a solid content of 7.1%, a protein content of 1.6% and showed a superior tastiness.

Example 7

Twenty grams of a hull-free sunflower seed was soaked for 2 minutes in boiling water, followed by draining. After repeating the same operation two times, the seed was roughly crushed, and 180 ml of an aqueous sodium hydroxide solution, of which the concentration was adjusted so that the pH of the liquor after addition was 7.5, was added, followed by grinding on a cutter-type homogenizer. The liquor after grinding was centrifugation-filtered through 150-mesh (0.104 mm. aperture size) filter cloth to obtain a sunflower seed milk. The protein content was 1.7%, and the oil content was 2.5%. The vegetable seed milk was creamy white and showed no grassy smell.

Example 8

Ten grams of soybean was added to 100 ml of boiling distilled water and boiled for 10 minutes, followed by draining. The liquor after draining was continuously boiled, and 10 g of sunflower seed was maintained in the liquor for 10 minutes, followed by draining. The weights of sunflower seed and soyabean after draining were 15 g and 18 g, respectively. After mixing these soaked seeds, the mixture was roughly crushed with addition of 100 ml of distilled water, and then ground on a grinder-type homogenizer with additional addition of 300 ml of distilled water. The pH of the grinding liquor was made neutral with an aqueous medium hydroxide solution, and the liquor was ground again on a grinder-type homogenizer. The weight of the resulting slurry was 430 g. Solid matters in the slurry were then removed by centrifugation to obtain 330 g of the intended vegetable seed milk.

Example 9

Ten grams of peanut was soaked for 10 minutes in 200 ml of boiling distilled water, followed by draining. The liquor after draining was continuously boiled, and 30 g of sunflower seed was soaked in the liquor for 10 minutes, followed by draining. The weights of peanut and sunflower seed after draining were 13 g and 48 g, respectively. After mixing these soaked seeds, the mixture was rougbly crushed with addition of 100 ml of distilled water, and then ground on a grinder-type homogenizer with addition of 260 ml of distilled water. The pH of the grinding liquor was made neutral with an aqueous sodium hydroxide solution, and the liquor was ground again on a grinder-type homogenizer. The weight of the resulting slurry was 360 g. Thereafter, solid matters in the slurry were removed by centrifugation to obtain 245 g of the intended vegetable seed milk.

Example 10

Twenty grams of a hull-free sunflower seed was put in an autoclave together with 50 g of water, and soaked by holding the autoclave in a 120°C oil bath for 15 minutes, followed by draining. The sunflower seed after draining was thoroughly ground by means of a wooden pestle in the presence of 180 ml of distilled water, and the grinding liquor was adjusted to a pH of 7.5 with 1N sodium hydroxide and kept at 70°C for 30 minutes. Thereafter, the liquor was ground for further 10 minutes on a cutter-type homogenizer to obtain a slurry. Thereafter, solid matters in the slurry were removed by passing the slurry through a 200-mesh (0.074 mm. aperture size) sieve to obtain a sunflower seed milk. The vegetable seed milk obtained had a protein content of 1.4% and an oil content of 2.8%.

Example 11

Sixty grams of sunflower seed, partially defatted by pressing, was soaked for 5 minutes in 300 g of boiling water, followed by draining. The soaked sunflower seed was treated twice on a wet-type pulverizer while adding 540 g of water containing 0.2% of sodium ascorbate and 0.4% of casein sodium. The pH of the resulting slurry was adjusted to 7.0 with 1N $NaHCO_3$, while maintaining the slurry at 80°C for 10 minutes with stirring. Thereafter, the slurry was further pulverized on a wet-type pulverizer and then on a high-pressure homogenizer, centrifuged to remove insoluble solid matters, and after heat-pasteurization, homogenized to obtain a sunflower seed milk. The vegetable seed milk obtained had a solid content of 8.7%, a protein content of 2.3%, as calculated with a conversion coefficient as 5.7, and a fat content of 2.5%.

Example 12

Four hundred grams of a sunflower seed milk having a solid content of 8%, 50 g of coconut oil, 4 g of casein sodium, 0.8 g of sodium ascorbate, 0.5 g of carrageenan, 0.5 g of disodium hydrogen phosphate, 1.5 g of glycerin fatty acid ester (Atmos® 150) and 0.5 g of sugar were mixed, and the mixture was stirred for 10 minutes on a cutter-type homogenizer. After pasteurization, the emulsified product obtained was homogenized on a two-step high-pressure homogenizer by setting the first step 24.53 mPa (250 kg/cm²) and the second step at 14.72 mPa (150 kg/cm²), to obtain the intended vegetable seed milk composition. On adding said composition to coffee, the composition was uniformly dispersed in the coffee without coagulation of proteins and oil-off, giving coffee having a food and mild flavor. `

Test Example 2

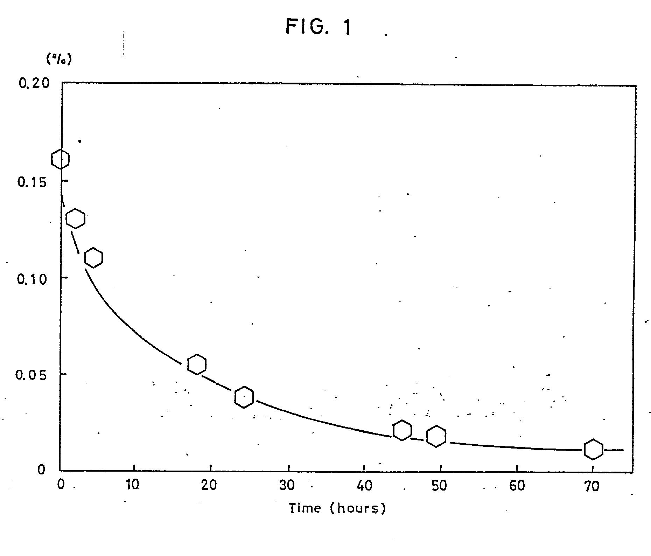

A mixture comprising 6 g of sunflower protein isolate (protein content, 90.1%), 6 g of sunflower oil, 188 g of distilled water, 0.5 g of soyabean lecithin, 0.5 g of sugar ester and 0.3 g of chlorogenic acid was thoroughly emulsified to produce a model substance of sunflower seed milk (calculated value of chlorenic acid concentration, 0.16%; analytical value by high-speed liquid chromatography, 0.16%). Thereafter, 30.5 g of said model substance was dialyzed without stirring using a dialysis membrane (type, 36/32) produced by Visking Company in the presence of 351.1 g of distilled water as an external solvent of dialysis. Fig. 1 shows the dependence on dialysis time of the chlorogenic acid concentration of the model vegetable seed milk which was measured by high-speed liquid chromatography. The chlorogenic acid concentration after 70 hours was 0.012%, and percent removal of chlorogenic acid was 93%.

Test Example 3

Five grams each of adsorbing resins, Duolite® S-861, S-862 and S-865 (Sumitomo Chemical Co.), was added to separate 0.1% aqueous chlorogenic acid solutions, followed by stirring at room temperature for 1 hour. Table 2 shows the chlorogenic acid concentration after treatment and the percent removal of chlorogenic acid.

Example 13

Forty grams of a hull-free sunflower seed was soaked at 120°C under pressure, drained and ground in the presence of 400 g of water. The pH of the resulting slurry was adjusted to 7 with sodium hydroxide, while heat-treating the slurry at 70°C for 1 hour. The liquor after heat-treatment was passed through a 200-mesh (0.074 mm. aperture size) sieve and homogenized on a high-pressure homogenizer to obtain a sunflower seed milk. On heat-treating the resulting vegetable seed milk at 100°C for 1 minute (hereinafter referred to as "heating test"), the vegetable seed milk was colored a yellowish green. Separately from this, on adding 1 ml of 28% aqueous ammonia to 5 ml of the vegetables seed milk (hereinafter, referred to as "alkali test"), the vegetable seed milk was colored yellow.

Example 14.

Ten milliliters of the vegetable seed milk obtained in the same manner as in Example 13 was dialyzed at room temperature for 70 hours with 1,000 ml of distilled water as an external solvent of dialysis.

The heating test was applied to the vegetable seed milk after dialysis, but coloration was not observed at all. Similarly, the alkali test was applied, but coloration was not observed at all, the vegetable seed milk showing the same color as that before addition.

Example 15

Dialysis was carried out in the same manner as in Example 14 except that the amount of the vegetable seed milk was 40 ml and that of the external solvent of dialysis was 400 ml. The heating test was applied in the same manner as in Example 14 to the vegetable seed milk after dialysis, but coloration was not seen at all. Similarly, the alkali test was applied in the same manner as in Example 14, but the vegetable seed milk was only colored a very pale yellowish white.

Example 16

To 30.0 g of the vegetable seed milk obtained as in Example 13 was added 15.0 g of Duolite® S-862 resin (Sumitomo Chemical Co.), followed by stirring at room temperature for 1 hour. The heating test was applied to the vegetable seed milk after treatment, but coloration was not observed. Similarly, the alkali test was applied, but little coloration was observed.

Example 17

Treatment was carried out in the same manner as in Example 16 except that the amounts of the vegetable seed milk and Duolite® S-862 resin were 117.5 g and 20.0 g, respectively. The heating test was applied to the vegetable seed milk after treatment, but coloration was not observed at all. Similarly, the alkali test was applied, but little coloration was observed.

TABLE 2

| Adsorbing resin | Resin (g) | Treatment liquor (g) | Chlorogenic acid concentration after treatment (%) | Percent removal of chlorogenic acid (%) |
|---|---|---|---|---|
| Duolite® S-861 | 5 | 10.0 | 0.012 | 88 |
| Duolite® S-862 | 5 | 12.4 | 0.002 | 98 |
| Duolite® S-865 | 5 | 11.9 | 0.006 | 94 |

Example 18

To 3.308 g of the sunflower seed milk obtained in the same manner as in Example 1 (except that heat pasteurization was not applied) was added 773 g of Duolite® S-861, and the mixture was kept at room temperature for 15 minutes with stirring. Thereafter, Duolite® S-861 was removed by filtration to recover 3,233 g of the sunflower seed milk. While the chlorogenic acid content of the sunflower seed milk before the removal of chlorogenic acid with Duolite® S-861 was 0.13%, that of the sunflower seed milk after the removal of chlorogenic acid was 0.02%. The chlorogenic acid content was obtained by adding ethanol and 1N aqueous acetic acid solution to the sunflower seed milk, centrifuging the mixture and measuring the UV absorption spectrum at 326 nm of the resulting supernatant.

Brief explanation of the drawing:

Fig. 1 graphically shows a change in the concentration of the residual chlorogenic acid against time on the dialysis of the model substance of sunflower seed milk in Test Example 2.

Ordinate shows the concentration of residual chlorogenic acid (%), and abcissa shows the dialysis time (hour).

**Claims**

1. A sunflower seed milk composition which comprises seed milk obtained by the pulverization of dehulled sunflower seed in the presence of water without insolubilization or separation of the seed protein, characterised by the inclusion of alkaline compound to adjust the pH of the composition to 6.5—8.0.

2. A composition as claimed in claim 1 which has been further treated with a molecular sieve membrane or adsorbing resin.

3. A composition as claimed in claim 1 or 2 further containing milk protein.

4. A composition as claimed in claim 3 wherein the milk protein is selected from casein, casein salts and casein-containing material.

5. A composition as claimed in any of claims 1—4, further containing at least one component selected from edible reducing agents, surface active agents, polysaccharides, metal ion chelating agents and oil seed (other than sunflower seed) proteins.

6. A method of producing a sunflower seed milk composition which comprises pulverizing dehulled sun-flower seed in the presence of water without separation or insolubilization of the seed protein and removing solid matter from the pulverized product, characterised by adding milk protein during and/or after the pulverization, and adjusting the pH of the pulverized product to 6.5—8.0 during and/or after the pulverization.

7. A method as claimed in claim 6 wherein after the removal of the solid matter, the pulverized product is treated with a molecular sieve membrane or adsorbing resin.

8. A method as claimed in claim 6 or 7 wherein the sunflower seed is soaked at a temperature not less than 40°C before pulverization.

9. A method as claimed in claim 6 or 7 or 8 wherein the pulverized product is heat-treated with stirring at a temperature from 65°C to the boiling point for 5 to 180 minutes.

10. A method as claimed in claim 9 wherein the resulting heat-treated product is re-pulverized.

11. A method as claimed in any of claims 6 to 10 which includes incorporating 0.1 to 1% of edible reducing agent based on the seed milk composition.

12. A method as claimed in any of claims 6 to 11 which employs sunflower seed which has been 20 to 80% defatted.

13. A method as claimed in any of claims 6 to 12 wherein a mixture of dehulled sunflower seed and soybean is pulverized in water.

**Patentansprüche**

1. Sonnenblumensamenmilchzubereitung aus Samenmilch, erhalten durch die Pulverisierung von enthülstem Sonnenblumensamen in Gegenwart von Wasser ohne Insolubilisierung oder Abtrennung des Samenproteins, gekennzeichnet durch die Zumengung einer alkalischen Verbindung zur Einstellung des pH der Zubereitung auf 6,5 bis 8,0.

2. Zubereitung nach Anspruch 1, dadurch gekennzeichnet, daß sie außerdem mit einer Molekularsiebmembran oder mit einem adsorbierenden Harz behandelt worde ist.

3. Zubereitung nach Anspruch 1 oder 2, dadurch gekennzeichnet, daß sie ußerdem ein Milchprotein enthält.

4. Zubereitung nach Anspruch 3, dadurch gekennzeichnet, daß das Milchprotein aus Kasein, Kaseinsalzen sowie Kasein enthaltenden Materialien ausgewählt ist.

5. Zubereitung nach einem der Ansprüche 1 bis 4, dadurch gekennzeichnet, daß sie wenigstens eine Komponente enthält, ausgewählt aus genießbaren Reduktionsmitteln, grenzflächenaktiven Mitteln, Polysacchariden, Metallionen-Chelierungsmitteln und Ölsamen (mit Ausnahme von Sonnenblumensamen-)-Proteinen.

6. Verfahren zur Herstellung einer Sonnenblumensamenmilchzubereitung, wobei enthülster Sonnenblumensamen in Gegenwart von Wasser ohne Abtrennung oder Insolubilisierung des Samenproteins pulverisiert wird und festes Material von dem pulverisierten Produkt entfernt wird, dadurch gekennzeichnet, daß Milchprotein während und/oder nach der Pulverisierung zugesetzt wird und der pH des pulverisierten Produktes auf 6,5 bis 8,0 während und/oder nach der Pulverisierung zugesetzt wird und der pH des pulverisierten Produkts auf 6,5 bis 8,0 während und/oder nach der Pulverisierung eingestellt wird.

7. Verfahren nach Anspruch 6, dadurch gekennzeichnet, daß nach der Entfernung des festen Materials das pulverisierte Produkt mit einer Molekularsiebmembran oder einem adsorbierenden Harz behandelt wird.

8. Verfahren nach Anspruch 6 oder 7, dadurch gekennzeichnet, daß der Sonnenblumensamen bei einer Temperatur von nicht weniger als 40°C vor der Pulverisierung eingeweicht wird.

9. Verfahren nach Anspruch 6 oder 7 oder 8, dadurch gekennzeichnet, daß das pulverisierte Produkt unter Rühren bei einer Temperatur von 65°C bis zum Siedepunkt während 5 bis 180 Minuten wärmebehandelt wird.

10. Verfahren nach Anspruch 9, dadurch gekennzeichnet, daß das erhaltene wärmebehandelte Produkt erneut pulverisiert wird.

11. Verfahren nach einem der Ansprüche 6 bis 10, dadurch gekennzeichnet, daß 0,1 bis 1% eines genießbaren Reduktionsmittels, bezogen auf die Samenmilchzubereitung, zugemengt wird.

12. Verfahren nach einem der Ansprüche 6 bis 11, dadurch gekennzeichnet, daß ein Sonnenblumensamen verwendet wird, der zu 20 bis 80% entfettet worden ist.

13. Verfahren nach einem der Ansprüche 6 bis 12, dadurch gekennzeichnet, daß eine Mischung aus enthülstem Sonnenblumensamen und Sojabohnen in Wasser pulverisiert wird.

## Revendications

1. Composition de lait de graines de tournesol, qui comprend du lait de graines obtenu par pulvérisation des graines de tournesol débarrassées de leur enveloppe, en présence d'eau sans insolubilisation ni séparation de la protéine des graines, caractérisée par l'inclusion d'un composé alcalin pour ajuster le pH de la composition à 6,5—8,0.

2. Composition suivant la revendication 1, qui a en outre été traitée avec une membrane de tamis moléculaire ou une résine adsorbante.

3. Composition suivant la revendication 1 ou 2, contenant en outre de la protéine de lait.

4. Composition suivant la revendication 3, dans laquelle la protéine de lait est choisie entre la caséine, des sels de caséine et une matière contenant de la caséine.

5. Composition suivant l'une quelconque des revendications 1 à 4, contenant en outre au moins un composant choisi entre des agents réducteurs comestibles, des agents tensio-actifs, des polysaccharides, des agents chélateurs d'ions métalliques et des protéines de graines oléagineuses (autres que les graines de tournesol).

6. Procédé de production d'une composition de lait de graines de tournesol, qui consiste à pulvériser des graines de tournesol débarrassées de leur enveloppe en présence d'eau sans séparation ni insolubilisation de la protéine des graines et à enlever la matière solide du produit pulvérisé, caractérisé par l'addition de protéine de lait pendant et/ou après la pulvérisation, et par l'ajustement du pH du produit pulvérise à 6,5—8,0 pendant et/ou après la pulvérisation.

7. Procédé suivant la revendication 6, dans lequel après l'enlèvement de la matière solide, le produit pulvérisé est traité avec une membrane de tamis moléculaire ou une résine adsorbante.

8. Procédé suivant la revendication 6 ou 7, dans lequel les graines de tournesol sont trempées à une température non inférieure à 40°C.avant la pulvérisation.

9. Procédé suivant la revendication 6 ou 7 ou 8, dans lequel le produit pulvérisé est traité à la chaleur sous agitation à une température allant de 65°C au point d'ébullition pendant 5 à 180 minutes.

10. Procédé suivant la revendication 9, dans lequel le produit traité à la chaleur résultant est repulvérisé.

11. Procédé suivant l'une quelconque des revendications 6 à 10, qui consiste à incorporer 0,1 à 1 % d'agent réducteur comestible sur la base de la composition de lait de graines.

12. Procédé suivant l'une quelconque des revendications 6 à 11, qui utilise des graines de tournesol qui ont été dégraissées à 20—80%.

13. Procédé suivant l'une quelconque des revendications 6 à 12, dans lequel un mélange de graines de tournesol débarrassées de leur enveloppe et de soja est pulvérisé dans l'eau.

FIG. 1